# DEMANDE DE BREVET EUROPEEN

(11) **EP 1 717 704 A2**
(43) Date de publication de la demande: **02.11.2006**
(21) Numéro de dépôt: 06112820.3
(22) Date de dépôt: 20.04.2006
(51) Int. Cl.: G06F 11/28

(54) **Protection du déroulement d'un programme exécuté par un circuit intégré**

(30) Priorité: 20.04.2005 FR 0551006
(71) Demandeur: ST MICROELECTRONICS S.A., 92120 Montrouge (FR)
(72) Inventeur: Teglia, Yannick, 13011, MARSEILLE (FR); Liardet, Pierre-Yvan, 13790, PEYNIER (FR); POMET, Alain, 13790, ROUSSET (FR)
(74) Mandataire: de Beaumont, Michel

(57) **Abrégé**

L'invention concerne un procédé et un circuit de protection du déroulement d'un programme, consistant à initialiser (35) au moins un compteur (36), poursuivre le déroulement normal (23') du programme, interrompre (IT) cette exécution lorsque le compteur atteint une valeur donnée (T), et exécuter au moins une vérification d'intégrité du calcul (22) suite à cette interruption.

## Description

### Domaine de l'invention

La présente invention concerne de façon générale les circuits électroniques et, plus particulièrement, la protection de données contenues dans un circuit intégré contre une extraction de ces données suite à des injections de fautes dans le fonctionnement du circuit. L'invention concerne plus particulièrement la protection contre une éventuelle tentative de perturbation d'un calcul manipulant des données considérées comme ne devant pas être communiquées à l'extérieur du circuit.

### Exposé de l'art antérieur

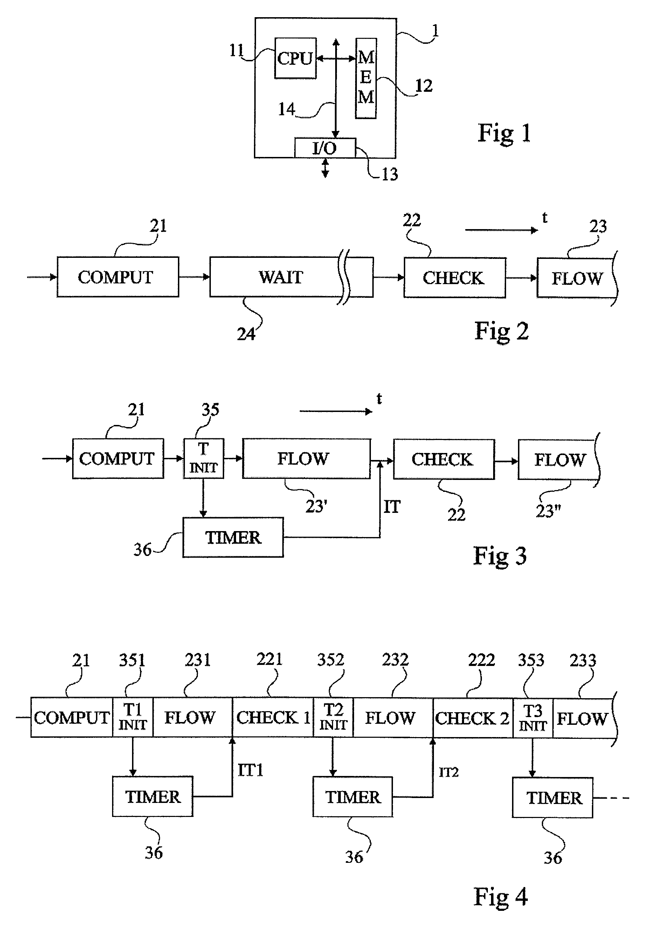

La figure 1 représente, de façon très schématique et sous forme de blocs, un exemple d'architecture simplifiée d'un circuit intégré 1, par exemple d'une carte à puce, du type auquel s'applique la présente invention. Le circuit 1 comporte une unité centrale de traitement 11 (CPU) associée à une ou plusieurs mémoires 12 (MEM) parmi lesquelles généralement au moins un élément de stockage non volatil d'une quantité numérique (par exemple, un code confidentiel) et un circuit 13 d'entrée-sortie (I/O) permettant l'échange des données avec l'extérieur du circuit 1. Les différents éléments communiquent par plusieurs bus 14 internes de données, d'adresses et de commandes.

Parmi les attaques possibles effectuées par des fraudeurs pour obtenir des données confidentielles de la puce 1, l'invention s'applique aux attaques dites par injection de fautes qui consistent à perturber le fonctionnement du composant 1 par exemple au moyen d'un rayonnement (laser, infrarouge, rayons X, etc.) ou par d'autres moyens (par exemple, en agissant sur l'alimentation du composant).

Les données que fournit (sort) le composant sur ses ports d'entrée-sortie 13 sont exploitées par le fraudeur pour percer des éléments secrets de la puce (algorithme, clé secrète, etc.) ou mettre en défaut un mécanisme de sécurité (authentification, identification, chiffrement, etc.).

Certains circuits intégrés comprennent des outils pour détecter des tentatives de fraude en vérifiant qu'un programme s'est exécuté correctement. Par exemple, on exécute deux fois les mêmes instructions d'un calcul et on vérifie qu'elles conduisent au même résultat, ou on effectue un calcul de signature sur des données extraites de la mémoire 12. En cas de détection d'une tentative de fraude, le composant est généralement bloqué, c'est-à-dire qu'il ne fournit pas le résultat demandé sur ses ports d'entrée-sortie 13.

La figure 2 représente, de façon très schématique, un exemple de séquencement d'un calcul avec vérification d'intégrité du type auquel s'applique la présente invention. Ce séquencement peut correspondre à une partie d'un programme exécuté par une carte à puce et on se contentera d'exposer la partie soumise à une vérification d'intégrité, c'est-à-dire à une vérification d'absence d'erreur sur le calcul ayant manipulé la quantité numérique sensible.

Généralement, on cherche à vérifier le calcul (que ce soit par une double exécution ou par un calcul de signature) avant de fournir le résultat à l'extérieur du circuit 1. Cela signifie qu'une exécution (bloc 21, COMPUT) du calcul dont on souhaite vérifier l'intégrité est suivie temporellement d'une vérification (bloc 22, CHECK) avant d'autoriser la poursuite de l'exécution du programme (bloc 23, FLOW) et notamment la fourniture d'un résultat à l'extérieur du circuit.

L'objet de la vérification 22 est de détecter une éventuelle perturbation par injection de faute lors de l'exécution du calcul 21.

Un problème est que si un fraudeur sait perturber (faire dérailler) un calcul, il sait également a priori perturber la vérification 22 de ce calcul. En particulier, si cette perturbation consiste à forcer un saut du programme dans son déroulement, il y a un risque que la vérification d'intégrité ne soit pas menée à terme, sans pour autant interdire la poursuite du programme, donc la sortie d'un résultat.

Une solution classique pour tenter de résoudre ce problème est illustrée par la figure 2. Elle consiste à espacer temporellement le calcul 21 de sa vérification d'intégrité 22 en intercalant, entre les deux (bloc 24, WAIT), soit de fausses opérations, soit une boucle d'attente, c'est-à-dire une séquence d'attente entre l'exécution du calcul et sa vérification.

Un inconvénient d'une telle solution est que l'introduction d'une telle séquence d'attente 24 nuit à la rapidité globale d'exécution des programmes dans le circuit intégré.

Un autre inconvénient est que, pour être efficace, la séquence d'attente 24 doit être relativement longue pour garantir qu'une seconde attaque destinée à perturber la vérification 22 tombe en fait dans la séquence d'attente 24.

Un autre inconvénient est que la séquence d'attente 24 peut elle-même être perturbée par une injection de faute, ce qui risque alors de permettre au programme de repartir dans son déroulement normal (bloc 23).

### Résumé de l'invention

La présente invention vise à pallier tout ou partie des inconvénients des procédés et systèmes connus de vérification d'intégrité de calculs exécutés par un circuit intégré.

L'invention vise plus particulièrement à éviter le recours à des séquences temporelles d'attente pour espacer l'exécution d'un calcul à protéger de sa vérification d'intégrité.

L'invention vise également à proposer une solution ne nécessitant aucune modification structurelle des circuits intégrés exécutant des algorithmes manipulant des quantités numériques à protéger.

L'invention vise également à proposer une solution versatile et adaptable, quel que soit le type de calcul exécuté.

Pour atteindre tout ou partie de ces objets ainsi que d'autres, la présente invention prévoit un procédé de protection du déroulement d'un programme par vérification d'intégrité d'un calcul exécuté par un circuit intégré, consistant à :
initialiser au moins un compteur ;
poursuivre le déroulement du programme ;
interrompre cette exécution normale lorsque le compteur atteint une valeur donnée ; et
exécuter au moins une vérification d'intégrité du calcul suite à cette interruption.

Selon un mode de mise en oeuvre de la présente invention, ladite valeur donnée est choisie aléatoirement dans une plage de valeurs.

Selon un mode de mise en oeuvre de la présente invention, une borne supérieure de ladite plage est choisie en fonction de l'exécution normale du programme pour qu'aucune instruction préjudiciable du point de la sécurité des données n'intervienne avant que la vérification d'intégrité du calcul ait pu être exécutée.

Selon un mode de mise en oeuvre de la présente invention, une borne inférieure de ladite plage est choisie pour conduire à une durée supérieure à la durée nécessaire à la vérification d'intégrité.

Selon un mode de mise en oeuvre de la présente invention, ledit compteur est un compteur temporel.

Selon un mode de mise en oeuvre de la présente invention, ledit compteur est un compteur d'instructions.

Selon un mode de mise en oeuvre de la présente invention, ledit compteur est un compteur d'un signal disponible dans le circuit intégré en relation avec la durée du calcul.

Selon un mode de mise en oeuvre de la présente invention, plusieurs vérifications d'intégrité sont effectuées sur des résultats intermédiaires du calcul avec, à chaque fois, des initialisations du compteur à des valeurs différentes.

La présente invention prévoit également un circuit intégré comportant au moins une unité centrale de traitement, une mémoire, un circuit d'entrée-sortie, et des moyens pour mettre en oeuvre le procédé de protection.

La présente invention prévoit également une carte à puce comportant un tel circuit.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, de façon partielle et très schématique, un exemple de circuit intégré du type auquel s'applique la présente invention ;
la figure 2 illustre un exemple classique de déroulement d'un programme de vérification d'intégrité du type auquel s'applique la présente invention ;
la figure 3 illustre, de façon très schématique et sous forme de blocs, un premier mode de mise en oeuvre d'un procédé de protection du déroulement d'un programme selon la présente invention ; et
la figure 4 illustre, de façon très schématique et sous forme de blocs, un deuxième mode de mise en oeuvre d'un procédé de protection du déroulement d'un programme selon la présente invention.

Les mêmes éléments ont été désignés par les mêmes références aux différentes figures. Pour des raisons de clarté, seuls les étapes de procédé et éléments de circuit qui sont utiles à la compréhension de l'invention ont été représentés aux figures et seront décrits par la suite. En particulier, les détails constitutifs des calculs dont on souhaite vérifier l'intégrité n'ont pas été exposés, l'invention étant compatible avec tout algorithme classique de manipulation de quantités numériques. De plus, les programmes de vérification d'intégrité eux-mêmes qu'il s'agisse de calculs multiples, de calcul de signature ou autre n'ont pas été détaillés, l'invention étant là encore compatible avec tout mécanisme de vérification d'intégrité classique.

### Description détaillée

Une caractéristique d'un mode de mise en oeuvre de la présente invention est de remplacer les étapes inutiles effectuées pendant la séquence d'attente entre la vérification d'intégrité et le calcul lui-même (bloc 24, figure 2) par des étapes du déroulement normal du programme, postérieures au calcul à protéger.

Une autre caractéristique d'un mode de réalisation de l'invention est d'interrompre ce déroulement normal du programme à au moins un instant, choisi de façon aléatoire, pour procéder à la vérification d'intégrité (au moins partielle) du calcul.

La figure 3 illustre, de façon très schématique et sous forme de blocs, par une vue à rapprocher de celle de la figure 2, un premier mode de mise en oeuvre de la présente invention. Cette figure représente le déroulement temporel d'un programme mettant en oeuvre un calcul à protéger.

Comme précédemment, à un instant du déroulement du programme, celui-ci exécute (bloc 21, COMPUT) un calcul dont on souhaite vérifier l'intégrité.

Selon ce mode de réalisation de l'invention, à l'issue du calcul, le programme initialise (bloc 35, T INIT) un compteur 36 (TIMER). Ce compteur est, par exemple, un compteur temporel généralement disponible dans n'importe quelle unité centrale de traitement (bloc 11, figure 1). Il peut également s'agir d'un compteur d'instructions ou de n'importe quel signal disponible (par exemple, l'état d'une variable) susceptible d'être mise en relation avec la durée d'exécution du calcul. Le compteur 36 est utilisé pour générer, à l'issue de son comptage, de préférence choisi de façon aléatoire dans une plage déterminée, une interruption (IT) .

Cette interruption est, selon ce mode de réalisation de l'invention, mise à profit pour interrompre le déroulement (bloc 23', FLOW) du programme qui s'est poursuivi de façon normale suite à l'initialisation 35 du compteur.

Un calcul de vérification d'intégrité (bloc 22, CHECK) en lui-même classique est exécuté par l'unité centrale suite à l'interruption IT.

Une fois la vérification d'intégrité effectuée, le déroulement du programme (bloc 23", FLOW) se poursuit sauf à mettre en oeuvre si besoin les étapes requises (blocage du circuit, effacement mémoire, etc.) en cas de défaut d'intégrité.

Selon un mode de mise en oeuvre préféré de la présente invention, le compteur 36 est initialisé pour compter ou décompter un intervalle de temps sélectionné de façon aléatoire entre deux valeurs qui sont choisies en fonction des étapes normales du programme susceptibles de se dérouler (bloc 23') avant la vérification d'intégrité. Ces valeurs sont choisies pour éviter qu'une action préjudiciable du point de vue de la sécurité soit susceptible d'intervenir avant que la vérification d'intégrité ait pu être effectuée.

La borne minimale correspond, par exemple, à la durée minimale requise pour séparer un calcul de sa vérification d'intégrité afin que le délai soit suffisant pour éviter qu'une deuxième perturbation tombe dans la vérification d'intégrité. Par exemple, ce temps minimum correspond à la durée maximale du programme de vérification d'intégrité.

La borne maximale est, de préférence, choisie en fonction des instructions 23 du programme qui suivent le calcul à protéger pour que l'interruption IT intervienne avant la fourniture d'un résultat à l'extérieur du circuit.

La figure 4 illustre, de façon très schématique et sous forme de blocs, un deuxième mode de mise en oeuvre de la présente invention. Cette figure représente le déroulement temporel d'un programme mettant en oeuvre un calcul à protéger.

Par rapport au mode de réalisation de la figure 3, le contrôle d'intégrité comporte plusieurs vérifications (CHECK1), 222 (CHECK2), etc. déclenchées par des interruptions successives IT1, IT2, etc. qui font suite à des initialisations successives 351 (T1 INIT), 352 (T2 INIT), 353 (T3 INIT), etc. du compteur 36 (ou de compteurs séparés). Le déroulement du programme se poursuit (blocs FLOW 231, 232, 233) entre chaque vérification. Chaque durée (ou nombre d'instructions) T1, T2, T3 de comptage est sélectionnée de façon aléatoire. Un tel mode de réalisation s'applique plus particulièrement à des vérifications de résultats intermédiaires d'un calcul.

Un avantage de la présente invention est qu'elle minimise la perte de temps liée à la vérification d'intégrité et, plus particulièrement, à l'espacement temporel de la vérification d'intégrité par rapport au calcul à vérifier. Le seul coût en temps engendré par l'invention correspond à la gestion de l'interruption qui est en pratique négligeable par rapport à la durée d'un calcul d'intégrité.

Un autre avantage de la présente invention est qu'elle respecte le caractère aléatoire de la durée d'espacement temporel entre le calcul à vérifier et la vérification d'intégrité.

Un autre avantage de la présente invention est qu'elle est aisée à mettre en oeuvre en exploitant l'unité centrale de traitement habituellement présente pour effectuer le calcul concerné.

Selon une variante de mise en oeuvre, le compteur 36 est initialisé pendant le calcul principal (bloc 21).

Selon une autre variante, le compteur 36 est initialisé au début du calcul à protéger. Selon un mode de mise en oeuvre préféré de cette variante, la borne inférieure du compteur est alors choisie en fonction du contenu du calcul à vérifier pour être supérieure à la durée d'exécution d'un nombre donné d'instructions de l'algorithme (par exemple, un nombre de tours d'un algorithme de type DES).

Un avantage est alors que, selon le moment où se déroule l'interruption, on vérifie l'un ou l'autre des résultats partiels. On dispose d'une information sur l'instant de l'interruption ainsi qu'une possibilité de prévoir plusieurs interruptions (figure 4).

Un autre avantage est que cela protège également d'un déroutement du programme en imposant une première vérification près du début de l'algorithme.

Bien entendu, la présente invention est susceptible de diverses variantes et modifications qui apparaîtront à l'homme de l'art. En particulier, bien que l'invention ait été décrite en relation avec un circuit intégré de type carte à puce, elle s'applique plus généralement à toute vérification d'intégrité de calcul visant à protéger une quantité numérique souhaitée secrète d'une éventuelle lecture par un fraudeur.

De plus, la mise en oeuvre pratique de l'invention est à la portée de l'homme du métier à partir des indications fonctionnelles données ci-dessus et en utilisant des outils classiques. En particulier, le choix de la plage de durées (ou de nombres d'instructions) en fonction du calcul à protéger, ainsi que l'instant d'initialisation (avant, pendant ou après le calcul) sont à la portée de l'homme du métier en fonction de l'application.

## Revendications

1. Procédé de protection du déroulement d'un programme par vérification d'intégrité d'un calcul exécuté par un circuit intégré, **caractérisé en ce qu'**il consiste à :
initialiser (35 ; 351, 352, 353) au moins un compteur (36) ;
poursuivre le déroulement (23' ; 231, 232, 233) du programme ;
interrompre (IT ; IT1, IT2) cette exécution normale lorsque le compteur atteint une valeur donnée (T ; T1, T2, T3) choisie aléatoirement dans une plage de valeurs ; et
exécuter au moins une vérification d'intégrité du calcul (22 ; 221, 222) suite à cette interruption.

2. Procédé selon la revendication 1, dans lequel une borne supérieure de ladite plage est choisie en fonction de l'exécution normale du programme pour qu'aucune instruction préjudiciable du point de la sécurité des données n'intervienne avant que la vérification d'intégrité (22 ; 221, 222) du calcul ait pu être exécutée.

3. Procédé selon l'une quelconque des revendications 1 et 2, dans lequel une borne inférieure de ladite plage est choisie pour conduire à une durée supérieure à la durée nécessaire à la vérification d'intégrité (22 ; 221, 222).

4. Procédé selon l'une quelconque des revendications 1 à 3, dans lequel ledit compteur (36) est un compteur temporel.

5. Procédé selon l'une quelconque des revendications 1 à 3, dans lequel ledit compteur (36) est un compteur d'instructions.

6. Procédé selon l'une quelconque des revendications 1 à 3, dans lequel ledit compteur (36) est un compteur d'un signal disponible en relation avec la durée du calcul.

7. Procédé selon l'une quelconque des revendications 1 à 6, dans lequel plusieurs vérifications d'intégrité (231, 232, 233) sont effectuées sur des résultats intermédiaires du calcul avec, à chaque fois, des initialisations (351, 352, 353) du compteur (36) à des valeurs différentes (T1, T2, T3).

8. Circuit intégré (1) comportant au moins une unité centrale de traitement (11), une mémoire (12), et un circuit d'entrée-sortie (13), **caractérisé en ce qu'**il comporte des moyens pour mettre en oeuvre le procédé selon l'une quelconque des revendications 1 à 7.

9. Carte à puce, **caractérisée en ce qu'**elle comporte un circuit selon la revendication 8.
